# EUROPEAN PATENT APPLICATION

(11) **EP 2 815 878 A1**
(43) Date of publication of application: **24.12.2014**
(21) Application number: 14171823.9
(22) Date of filing: 10.06.2014
(51) Int. Cl.: B32B 5/02, B32B 27/12, B32B 27/30, B32B 27/36, B32B 3/28

(54) **Plate and method for manufacture thereof**

(30) Priority: 10.06.2013 NL 2010947
(71) Applicant: Kunststoffenindustrie Van Boven B.V., 4203 NN Gorinchem (NL)
(72) Inventor: Schmaal, Eye, 4285 CB Woudrichem (NL)
(74) Representative: Algemeen Octrooi- en Merkenbureau B.V.

(57) **Abstract**

The invention relates to a plate, comprising a plate body of polyester. The plate comprises an acrylate layer which at least substantially wholly covers a side of the plate body. With the acrylate layer improved properties are obtained, particularly in respect of colour fastness of the plate. The invention further relates to a method for manufacturing such a plate, wherein a polyester plate body is covered with an acrylate layer. A profile can additionally be formed in the plate.

## Description

The invention, according to a first aspect thereof, relates to a method for manufacturing a polyester plate, comprising the step of providing a plate body of polyester.

In a known method, which has been applied for more than sixty years, a thin film of polyester is fed as lower film from a supply roll to a machine and transported by the machine in a production direction. Further downstream a layer of polyester resin is poured onto the lower film. Still further downstream a glass fibre mat is arranged in the poured polyester and subsequently impregnated with polyester resin. An upper film in the form of a second polyester film is then arranged over the polyester resin with the glass fibre mat. The thus formed sandwich is carried through a pressure roller which presses out of the sandwich air which may be present in the sandwich and imparts a defined uniform thickness to the sandwich. The sandwich is then heated in an oven and finally cooled on a cooling track located downstream. The lower and upper films are then removed and there remains a strip of glass fibre-reinforced polyester which is finally cut at the side edges and shortened to desired lengths. Removal of the polyester films is simple since during production no reaction takes place between the films on the one hand and the polyester resin on the other. The lower and upper films can thus be reused repeatedly for such a method.

It is an object of the present invention to provide a method for manufacturing a polyester plate of the type stated in the preamble, which thus manufactured plate is improved in respect of the lifespan thereof. According to the first aspect of the invention the method comprises for this purpose the step of providing an acrylate layer on at least one side of the plate body such that this layer at least substantially wholly covers the side.

In the present invention an acrylate layer is understood to mean a layer consisting of acrylate or at least comprising at least 50% by weight of acrylate. According to the present invention the acrylate layer is arranged from a supply roll on the polyester resin in the form of a film. In the method according to the present invention the upper and/or the lower film of the known method is in fact replaced by an acrylate film. The acrylate is of course not removed from the polyester resin at the end of the production process, this in contrast to the polyester upper or lower film in the known method.

It has been found by the inventor that the quality of a plate manufactured according to the method of the invention increases considerably with an acrylate layer provided on the side of the plate body. Achieved in particular with the method in relatively inexpensive manner is that the desired properties of the plate, and particularly the colour fastness of the plate, are retained for longer as a result of the acrylate layer, particularly when during application the acrylate layer faces toward a side from which sunlight is incident. Only a relatively thin acrylate layer need be applied, whereby the plate according to the invention is relatively inexpensive. The relatively stable acrylate layer arranged according to the method absorbs energy which would otherwise cause undesired weathering in the relatively unstable polyester layer. The energy is moreover partially blocked. A plate which is relatively inexpensive and has the same colour fastness properties as acrylate and which is improved compared to the acrylate plates and the polyester plates is hereby thus obtained in a manner which is not obvious.

Attempts have been made in the past to increase the UV-resistance of polyester roofing boards and to prevent weathering thereof. It is for instance known in the known method as according to the introduction to pour a mixture of polyester resin with a relatively small proportion of acrylate onto the lower film in order to improve the UV-resistance of the polyester plate and prevent weathering thereof. The weathering is in fact not so much prevented hereby as delayed. It has moreover been found that in such a method acrylate particles are encapsulated by the polyester resin and lose some of their intended function. And acrylate particles which, during application, lie on the side opposite a side illuminated by the sun are of course not very effective because relatively little polyester is as yet present "in the shade" of the acrylate that it can be protected by the acrylate.

It is also known in a method as according to the introduction to replace the upper film with a polyester film, the composition of which has been changed such that it adheres better to the polyester resin-glass fibre mixture and is not removed at the end of the process. The polyester film in question comprises protective materials which protect the polyester resin-glass fibre mixture, but do not prevent weathering or discolouration thereof. A drawback here is that the adhesion between the original polyester resin and polyester film is not very good. It has been found in practice that both layers begin to detach from each other after six years, which limits the lifespan of the thus manufactured plates.

Acrylate films have been used for more than 15 years for the purpose of arranging a UV protection layer by laminating thermoplastics such as PVC and ABS plates. An example is the lamination of a decorative PVC film. The final decorative film is then laminated onto PVC profiles. In graphic art it is known to laminate acrylate films onto an upper side of PVC or PET in order to protect these films from UV radiation.

The plate is exceptionally easy to manufacture in that in an embodiment the method comprises the step of saturating a glass mat or roving, and optionally the acrylate layer, with a polyester resin, wherein the method comprises the further steps of subsequently bringing and pressing together the thus formed polyester layer and the acrylate layer, heating the plate body to a temperature lying in the range of 80-120°C, preferably 90-100°C, and allowing the plate body to cool. The resin functions as a means for connecting the plate body and the acrylate layer. Because the acrylate layer is arranged on the polyester-glass fibre sandwich in the form of a film and is then pressed therein, after which the assembly is heated, the acrylate can react with styrene present in the polyester resin. Following curing of the resin, the acrylate layer is therefore thinner than before arranging thereof. In the boundary area the product of the reaction provides for an excellent adhesion of the acrylate layer to the polyester resin. A secure connection is thus effected in relatively simple manner which is less susceptible to delamination than for instance the known product, wherein a polyester film with protective materials is provided on the polyester-glass fibre mixture. As stated above, the first delamination occurs in the latter after about 6 years. During a weathering experiment performed with the product according to the present invention no trace of incipient delamination was found in a durability test of 8000 hours, corresponding to a period of use twice as long as in "normal" use.

For the purpose of providing a plate covered on two sides with acrylate it is recommended that the method comprises the step of providing an acrylate film on a carrier, saturating the acrylate film with resin, arranging the plate body of polyester on the acrylate film, providing an acrylate layer on a first side of the plate body and on the opposite side of the plate body such that it at least substantially wholly covers the side. In contrast to the above discussed method, the polyester lower film is replaced in this method by a lower film of acrylate which is carried into the machine from a roll. The acrylate is of course not removed from the polyester resin at the end of the production process, this in contrast to the polyester film of the known method.

In an embodiment the curing of the resin can be accelerated when the method comprises the step of guiding the assembly of plate body and acrylate layer through an oven.

Curing can be combined in effective manner with the forming of a profile in the plate when means are disposed in the oven with which a profile, preferably a corrugated profile or a sheet pile profile, can be pressed into the assembly of plate body and acrylate layer and wherein the method comprises the step of arranging a profile, preferably a corrugated profile, in the assembly. A corrugated plate for instance can thus be formed.

In the method an acrylate film having a thickness of at least 90 mu is preferably arranged. During the adhesion the side of the fixed acrylate film facing toward the polyester layer reacts with the liquid polyester resin, whereby a thinner acrylate layer remains on the plate, for instance about 75 mu in the case a film of 90 mu is applied. For a better protection of the polyester the thickness of the acrylate film more preferably amounts to at least 110 mu or, still more preferably, at least 125 mu.

According to a second aspect, the present invention relates to a plate comprising a plate body of polyester and manufactured according to the first paragraph. Such a plate is known. The plate comprises a plate body of polyester, in fact a glass mat or roving saturated with polyester resin which is then cured. The glass imparts the desired stiffness to a polyester plate. Unless expressly stated otherwise, a polyester plate is always understood in this document to mean such a plate in optionally cured state. The plate can be formed as corrugated plate and then serves for instance as fence, partition or roof covering. It is a drawback of such a plate that it discolours relatively quickly under the influence of sunlight. The transparency hereby decreases, and thereby also the amount of natural light admitted by the known plate into a building with such plates as roof covering. If transparency is not (the only factor) important for the application of the known plate, the economic lifespan of the product can be relatively short for aesthetic reasons.

It is an object of the present invention to provide a plate of the type mentioned in the previous paragraph which has been improved in respect of the lifespan thereof. It is a particular object to provide a plate of improved quality which is relatively easy to manufacture and which is relatively inexpensive.

The invention provides for this purpose a plate manufactured according to a method according to the present invention and comprising a plate body of polyester and an acrylate layer which at least substantially wholly covers a side of the plate body. In the present invention a plate body is understood to mean an optionally cured plate-like body extending at least substantially in two directions, i.e. a longitudinal direction and a width direction, which are orthogonal. The thickness of the plate body, measured in a direction substantially perpendicularly of the longitudinal direction and the width direction, is relatively small relative to the longitudinal direction and the width direction. It is noted here that the plate body need not necessarily extend flat in the longitudinal direction and the width direction. It is possible to envisage a profile, for instance a corrugated profile, being formed in the plate body.

An acrylate layer is understood in the present invention to mean a layer consisting of acrylate or at least comprising at least 50% by weight of acrylate.

It has been found by the inventor that the quality of the plate with an acrylate layer according to the invention provided on the side of the plate body increases considerably. Particularly achieved in relatively inexpensive manner is that the desired properties of the plate, and particularly the colour fastness of the plate, are retained for longer, particularly when the acrylate layer faces during use toward a side from which sunlight is incident. Only a relatively thin acrylate layer need be applied, whereby the plate according to the invention is relatively inexpensive.

The object of the present invention is hereby achieved.

It is noted that plates substantially or wholly of acrylate are per se known. Such acrylate plates have a good resistance to discolouration, but are however relatively expensive. Surprisingly, it has now been found that the relatively inexpensive polyester can be combined in simple and effective manner with a relatively smaller quantity of acrylate in order to thus obtain a plate which is relatively inexpensive and still has a good colour fastness. The relatively stable acrylate layer absorbs energy which would otherwise cause undesired weathering in the relatively unstable polyester layer. The energy is moreover partially blocked. A plate which is improved relative to the acrylate plates and the polyester plates, which is relatively inexpensive and has the same colour fastness properties of acrylate, is hereby thus obtained in a manner which is not obvious.

Further embodiments are the subject-matter of the dependent claims and will be further elucidated hereinbelow.

It is possible to envisage both sides of the plate body being covered with an acrylate layer. However, in a relatively inexpensive embodiment the acrylate layer covers only one side of the plate body. A plate body with improved properties, in particular improved colour fastness and light transmission, is hereby obtained in relatively inexpensive manner.

In a particular embodiment the plate comprises only the plate body and the acrylate layer, as well as means for connecting the plate body and the acrylate layer. In an embodiment these means comprise a resin, preferably a resin which is transparent in cured state.

As already stated, a profile can be formed in the plate, preferably a corrugated profile or sheet pile profile. Other profiles can however also be envisaged. In a particular embodiment the plate can for instance be a corrugated plate.

When the plate has a thickness lying in the range of 0.5 to 6 mm, preferably 0.5 to 4.0 mm, the plate is highly suitable as for instance roofing board.

For the purpose of providing sufficient protection against weathering of the polyester it is recommended that the acrylate layer has a thickness of at least 75 mu. The thickness can in principle be unlimited, at least within the thickness of the plate, wherein it is the case that the thicker the acrylate layer, the more expensive the plate and the smaller the advantage relative to a plate manufactured wholly from acrylate. It is therefore recommended that the acrylate layer amounts to a maximum of 25%, more preferably a maximum of 10% of the thickness of the plate.

The invention will be further elucidated hereinbelow on the basis of the description of a preferred embodiment of a plate according to the present invention, with reference to the following figures. Herein:
Fig. 1 shows a first embodiment of a plate according to the present invention;
Fig. 2 shows a second embodiment of a plate according to the present invention;
Fig. 3 shows a third embodiment of a plate according to the present invention; and
Fig. 4 shows a schematic view of a production line for performing a method according to the present invention for the purpose of manufacturing a polyester plate body according to the present invention.

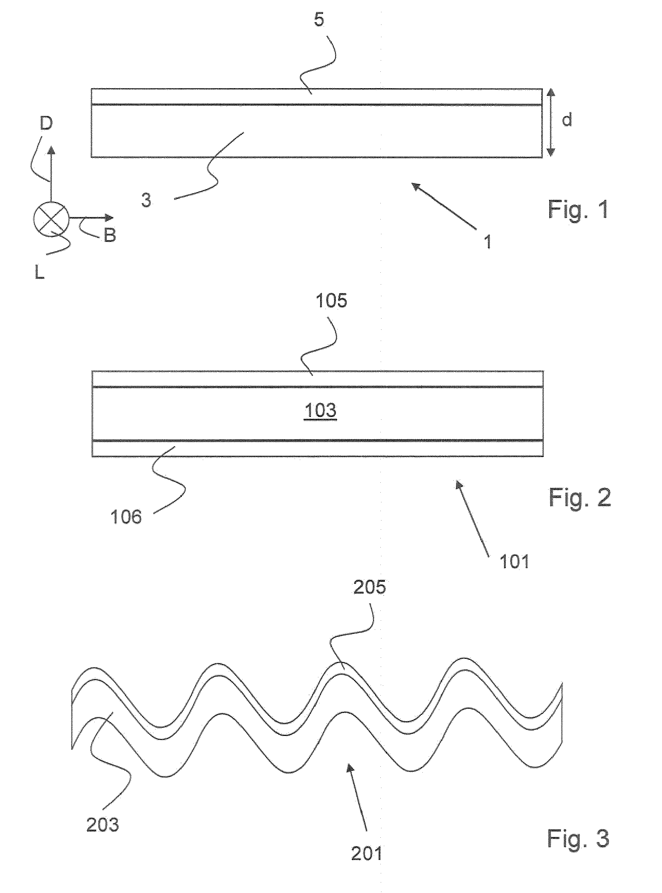

Fig. 1 shows a cross-sectional view of a plate 1 according to a first embodiment of the present invention. The plate 1 extends substantially in a longitudinal direction L and a width direction B. The plate 1 has a thickness d as measured in a direction D perpendicularly of the longitudinal direction L and the width direction B. It is noted here that the thickness d is not shown to scale relative to the width direction B, and that it is very well possible to envisage other ratios of the thickness and the width. The thickness d of the plate will generally lie in the range of 0.5 mm to 2.0 mm and is many times smaller than the width and/or length of the plate. The thickness of the acrylate layer preferably amounts to at least 0.075 mm. The thickness of the acrylate layer, particularly from considerations of cost, is preferably less than 25%, more preferably less than 10% of the thickness of the whole plate. Determined dimensions of the plate are known here to the skilled person, and it will thus be apparent that the invention is not limited to the dimensions shown here.

The plate 1 according to the present invention comprises a plate body 3 and, provided on a side thereof, an acrylate layer 5 arranged according to a method of the present invention in the form of a film on the polyester plate body 3 and at least substantially wholly covering that side. The acrylate layer preferably consists wholly of acrylate here, but can however also comprise at least 50% by weight of acrylate. The acrylate layer 5 is applied here to the side extending substantially parallel to the longitudinal direction L and the width direction B.

Fig. 2 shows a schematic cross-sectional view of a plate 101 according to a second embodiment of the present invention. In this second embodiment the plate 101 comprises a plate body of polyester 103 and an acrylate layer 105 provided on a side thereof, as well as a further acrylate layer 106 which at least substantially wholly covers a side remote from the above mentioned side. Both acrylate layers 105, 106 are arranged according to a method of the present invention in the form of a film on the polyester plate body 103. Such an embodiment displays a further improved colour fastness of the plate 101. The plate is better suited than the layer provided on one side with acrylate to applications in which sunlight can irradiate the plate from two sides. And in applications with single-sided irradiation by sunlight the person arranging the plate does not have to keep looking which side is the side protected with acrylate that has to be directed toward the incident sunlight.

Finally, Fig. 3 shows a schematic cross-sectional view of a plate 201 according to a third embodiment of the present invention. The plate 201 takes a corrugated form here and in the shown embodiment consists of a corrugated polyester plate body 203 and a corrugated acrylate layer 205 which is provided on only one side of the plate body 203 and which is arranged according to a method of the present invention in the form of a film on the polyester plate body 203.

The plate according to the present invention can be manufactured here in efficiently simple manner, as will be elucidated below.

The method according to the present invention comprises the step of providing a plate body 3, 103 of polyester. The plate body 3, 103 preferably takes a flat form here, as shown in Fig. 1 and 2. According to the invention an acrylate layer 5, 105 is then provided in the form of a film on a side of the plate body 3, 103 such that it at least substantially wholly covers the side. This can be realized in simple manner by saturating a glass mat or roving with a polyester resin, for the purpose of forming the preferably flat plate body 3, 103, and the acrylate layer 5, 105 and by subsequently bringing and pressing together this plate body and this acrylate layer. Following curing of the polyester resin a construction is then obtained as shown in Fig. 1 and 2.

Curing of the polyester resin can take place very quickly and efficiently when the assembly of plate body 3, 103 and acrylate layer 5, 105 is guided in per se known manner through an oven at a temperature of 90-100°C.

Heating of the plate body 3, 103 and the acrylate layer 5, 105 further makes it also possible to form a profile in the plate. In an embodiment means are disposed for this purpose in the oven with which this profile, preferably a corrugated profile as shown schematically in Fig. 3, can be pressed into the assembly 201 of the polyester plate body 203 and the acrylate layer 205. In an embodiment the method thus comprises the step of arranging a profile, preferably a corrugated profile, in the assembly.

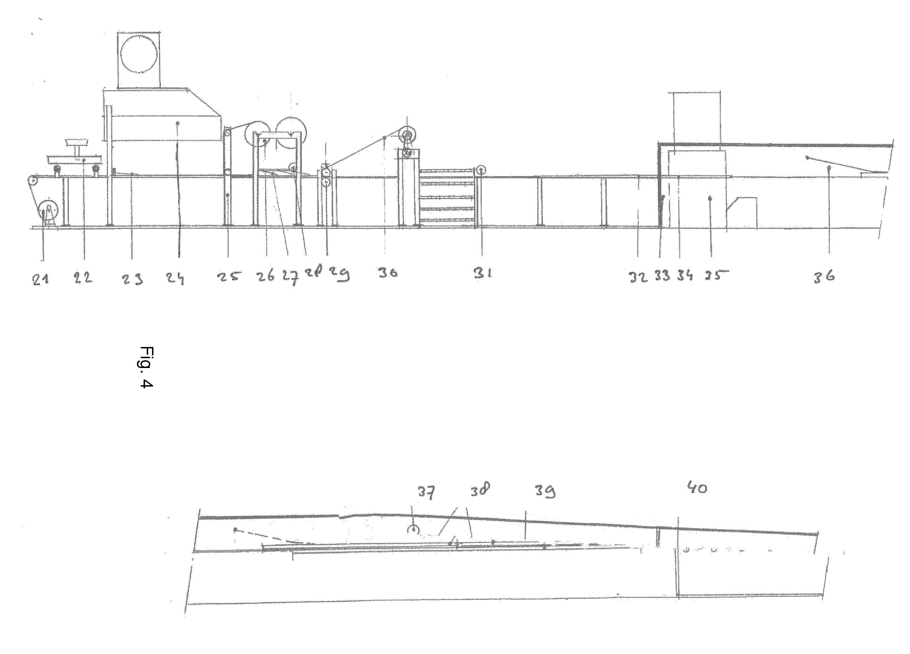

Fig. 4 shows a schematic view of a production line for performing a method according to the present invention for the purpose of manufacturing a polyester plate body according to the present invention. At the start of the production process a polyester lower film is fed into the machine from a roll 21. The lower film is then guided under a resin supply 22 where polyester resin is poured onto the lower film. A levelling device 23 levels the polyester resin and an extractor 24 suctions undesired particles out of the air above the strip with the lower film and the liquid polyester resin. The strip then passes a glass mat feed 25, where a glass mat 26 is arranged from a roll onto the liquid polyester resin. The glass mat is then further impregnated at the position of reference numeral 27. The strip then passes through a pressure roller 29, where an acrylate film 30 is pressed from a roll onto and into the liquid polyester resin with the glass fibre mat and wherein the strip is given a uniform thickness, and air possibly present in the material of the strip is removed from the strip. The strip then passes a counter 31 and a wooden comb 32 and is carried into an oven 33, where the material is heated to a temperature of about 90°. In this phase the acrylate on the underside of the acrylate film reacts with styrene from the liquid polyester resin and a good connection is formed between the two layers. After being held at the desired temperature for a time the product is finally cooled, wherein the material cures. With the thus produced material a weathering test is started, i.e. a Ci 5000 Xenon test in accordance with DIN ISO EN4892-2 guidelines. The following polyester plates were tested:
1x polyester plate with 450 gr. glass mat, resin and protective foil Plexiglas 0f063 with a thickness of 125 mu
1x polyester plate with 450 gr. glass mat, resin and protective film Hostaphan RUHS with a thickness of 20 mu

After 4000 hours it can be clearly seen that the Hostaphan RUHS film detaches from the polyester plate. This does not happen with the Plexiglas film (not even at 6000 hours).

At the start of the test, light transmission for the stated plates is as follows:
With plexiglas film 79.33%
With Hostaphan 80.47%

After 6000 hours the light transmission is as follows:
With plexiglas film 77.34%
With Hostaphan 75.11%

The results of the test show that the acrylate film (Plexiglas 0f063) adheres to the polyester for longer than the polyester film (Hostaphan RUHS). Although the light transmission of the polyester plate with the acrylate film is initially slightly worse than that of the polyester plate with the polyester protective film, the light transmission of the polyester plate with the acrylate film has only decreased by 2 percentage point after 6000 hours, while the light transmission of the polyester plate with the polyester protective film has decreased by over 5 percentage point.

It will be apparent to the skilled person that the invention has been specified above on the basis of several possible preferred embodiments. The invention is however not limited to these embodiments. Many modifications can be envisaged within the context of the invention. A plate according to the present invention can thus also be manufactured in other manner, for instance by immersing a polyester plate in an acrylate bath, optionally with addition of additives. The protection sought is defined by the appended claims.

## Claims

1. A method for manufacturing a polyester plate, comprising the step of providing a plate body of polyester, **characterized by** the step of providing an acrylate layer on at least one side of the plate body such that it at least substantially wholly covers the side.

2. A method according to claim 1, wherein the method comprises the step of saturating a glass mat or roving, and optionally the acrylate layer, with a polyester resin, wherein the method comprises the further steps of subsequently bringing and pressing together the thus formed polyester layer and the acrylate layer, heating the plate body to a temperature lying in the range of 80-120°C, preferably 90-100°C, and allowing the plate body to cool.

3. A method according to claim 1 or 2, wherein the method comprises the step of providing an acrylate film on a carrier, saturating the acrylate film with resin, arranging on the acrylate film a polyester glass layer of a glass mat or roving saturated with polyester resin on a first side of the plate body and providing an acrylate layer on the opposite side of the polyester glass layer such that it at least substantially wholly covers the side.

4. A method according to claim 3, wherein the method comprises the step of guiding the assembly of plate body and acrylate layer through an oven for the purpose of curing the resin.

5. A method according to claim 4, wherein means are disposed in the oven with which a profile, preferably a corrugated profile or sheet pile profile, can be pressed into the assembly of plate body and acrylate layer and wherein the method comprises the step of arranging a profile, preferably a corrugated profile, in the assembly.

6. A method according to one or more of the preceding claims, wherein the acrylate film has a thickness of at least 90 mu.

7. A plate, comprising a plate body of polyester, **characterized in that** the plate comprises an acrylate layer which at least substantially wholly covers a side of the plate body.

8. A plate according to claim 7, wherein the acrylate layer covers only one side of the plate body.

9. A plate according to claim 7 or 8, wherein the plate comprises only the plate body and the acrylate layer, as well as means for connecting the plate body and the acrylate layer.

10. A plate according to claim 9, wherein the means for connecting comprise a resin.

11. A plate according to any of the foregoing claims 7 to 10, wherein a profile, preferably a corrugated profile or a sheet pile profile, is formed in the plate.

12. A plate according to any of the claims 7 to 11, **characterized in that** the plate has a thickness lying in the range of 0.5 to 6.0 mm.

13. A plate according to any of the claims 7 to 12, **characterized in that** the acrylate layer has a thickness of at least 75 mu.
